# EUROPEAN PATENT APPLICATION

(11) **EP 3 226 140 A2**
(43) Date of publication of application: **04.10.2017**
(21) Application number: 17161846.5
(22) Date of filing: 20.03.2017
(51) Int. Cl.: G06F 11/36

(54) **DATA PROCESSING METHOD, DATA PROCESSING DEVICE, TERMINAL AND SMART DEVICE**

(30) Priority: 21.03.2016 CN 201610162171
(71) Applicant: Beijing Xiaomi Mobile Software Co., Ltd., Beijing 100085 (CN)
(72) Inventor: SUN, Qimin, Beijing, 100085 (CN); HOU, Enxing, Beijing, 100085 (CN); MENG, Deguo, Beijing, 100085 (CN)
(74) Representative: Orian, Yvette Suzanne

(57) **Abstract**

The present invention relates to a data processing method, a data processing device, a terminal and a smart device. The data processing method includes: acquiring (S101) data packets transmitted between a first microcontroller unit (MCU) and a second MCU of a smart device and carried with respective serial numbers, the second MCU being provided in a Wireless Fidelity (Wi-Fi) module of the smart device; and processing and displaying (S102) the data packets based on the respective serial numbers so as to debug the second MCU. By applying the embodiments of the present invention, the terminal may acquire data packets carried with respective serial numbers, and process and display the data packets carried with the respective serial numbers, so as to perform debugging. In the embodiments of the present invention, the terminal is enabled to conveniently and directly determine data receiving and sending sequences based on the respective serial numbers, in this way, it is convenient to debug the second MCU, and discover problems existing in data transmission timely, and also facilitate the user's operations.

## Description

### TECHNICAL FIELD

The present invention relates to the field of smart devices, and more particularly, to a data processing method, a data processing device, a terminal and a smart device.

### BACKGROUND

With the development of wireless communication technologies such as Wi-Fi (Wireless Fidelity), Bluetooth and the like, a Wi-Fi module can be provided in a smart device, such that the smart device can communicate with a cloud server and can be controlled by a terminal. The Wi-Fi module usually consists of a Wi-Fi chip and a MCU (Microcontroller Unit), wherein the Wi-Fi chip is configured to communicate with other devices, and the MCU is configured to control the smart device together with a MCU of the smart device itself.

In the relevant art, the MCU and the Wi-Fi module in the smart device communicate with each other via two serial lines. Two serial debugging tools will be required to check data transmitted in the two serial lines, this is not convenient to determine data receiving and sending sequences, and thus causes great difficulty in debugging.

### SUMMARY

Accordingly, the present invention provides a data processing method, a data processing device, a terminal and a smart device in accordance with claims which follow.

According to a first aspect of embodiments, the invention relates to a method for processing data, which can be performed by a terminal, including:
acquiring data packets transmitted between a first microcontroller unit (MCU) and a second MCU of a smart device and carried with respective serial numbers, the second MCU being provided in a Wireless Fidelity (Wi-Fi) module of the smart device; and
processing and displaying the data packets based on the respective serial numbers so as to debug the second MCU.

In a particular embodiment, processing and displaying the data packets based on the respective serial numbers includes:
extracting the respective serial numbers carried in each of the data packets, the respective serial numbers being added into the data packets by the second MCU;
sorting the data packets based on the respective serial numbers; and
displaying the sorted data packets.

In a particular embodiment, after processing and displaying the data packets based on the respective serial numbers, the method further includes:
sending a debug command to the second MCU based on a displaying result so as to modify operating programs of the second MCU.

In a particular embodiment, before extracting the respective serial numbers carried in each of the data packets, the method further includes:
determining data packets irrelevant to the debugging among the acquired data packets; and
masking the determined data packets.

In a particular embodiment, acquiring data packets transmitted between a first MCU and a second MCU of a smart device and carried with respective serial numbers includes:
acquiring the data packets transmitted between the first MCU and the second MCU of the smart device and carried with the respective serial numbers in a wireless communication manner.

In a particular embodiment, acquiring data packets transmitted between a first MCU and a second MCU of a smart device and carried with respective serial numbers includes:
acquiring the data packets transmitted between the first MCU and the second MCU of the smart device and carried with the respective serial numbers based on a User Datagram Protocol (UDP) or an Internet Protocol (IP).

According to a second aspect of embodiments, the invention relates to a method for processing data, which can be performed by a smart device, including:
determining data packets transmitted from and to a first MCU of a smart device;
adding respective serial numbers to each of the data packets;
sending the data packets added with the respective serial numbers to a terminal such that the terminal processes and displays the data packets based on the respective serial numbers and performs debugging.

In a particular embodiment, before determining data packets transmitted from and to a first MCU of a smart device, the method further includes:
acquiring data streams transmitted from and to the first MCU of the smart device; and
packing the data streams into data packets.

In a particular embodiment, sending the data packets added with the respective serial numbers to a terminal includes:
sending the data packets added with the respective serial numbers to the terminal in a wireless communication manner, or based on a User Datagram Protocol (UDP) or an Internet Protocol (IP).

According to a third aspect of embodiments, the invention relates to a device for processing data, including:
a first acquisition module configured to acquire data packets transmitted between a first MCU and a second MCU of a smart device and carried with respective serial numbers, the second MCU being provided in a Wi-Fi module of the smart device; and
a processing module configured to process and display the data packets based on the respective serial numbers so as to debug the second MCU.

In a particular embodiment, the processing module includes:
an extraction submodule configured to extract the respective serial numbers carried in each of the data packets, the respective serial numbers being added into the data packets by the second MCU;
a sorting submodule configured to sort the data packets based on the respective serial numbers; and
a displaying submodule configured to display the sorted data packets.

In a particular embodiment, the device further includes:
a first sending module configured to send a debug command to the second MCU based on a displaying result so as to modify operating programs of the second MCU.

In a particular embodiment, the device further includes:
a first determination module configured to determine data packets irrelevant to the debugging among the acquired data packets; and
a masking module configured to mask the determined data packets.

In a particular embodiment, the first acquisition module includes:
a first acquisition submodule configured to acquire the data packets transmitted between the first MCU and the second MCU of the smart device and carried with the respective serial numbers in a wireless communication manner.

In a particular embodiment, the first acquisition module includes:
a second acquisition submodule configured to acquire the data packets transmitted between the first MCU and the second MCU of the smart device and carried with the respective serial numbers based on a User Datagram Protocol (UDP) or an Internet Protocol (IP).

According to a fourth aspect of embodiments, the invention relates to a device for processing data, including:
a second determination module configured to determine data packets transmitted from and to a first MCU of a smart device;
an addition module configured to add respective serial numbers to each of the data packets;
a second sending module configured to send the data packets added with the respective serial numbers to a terminal such that the terminal processes and displays the data packets based on the respective serial numbers and performs debugging.

In a particular embodiment, the second determination module includes:
a second acquisition submodule configured to acquire data streams transmitted from and to the first MCU of the smart device; and
a packing submodule configured to pack the data streams into data packets.

In a particular embodiment, the second sending module includes:
a second sending submodule configured to send the data packets added with the respective serial numbers to the terminal in a wireless communication manner, or based on a User Datagram Protocol (UDP) or an Internet Protocol (IP).

According to a fifth aspect of embodiments, the invention relates to a terminal, including: a processor; and a memory configured to store instructions executable by the processor; wherein, the processor is configured to perform:
acquiring data packets transmitted between a first microcontroller unit (MCU) and a second MCU of a smart device and carried with respective serial numbers, the second MCU being provided in a Wireless Fidelity (Wi-Fi) module of the smart device; and
processing and displaying the data packets based on the respective serial numbers so as to debug the second MCU.

According to a sixth aspect of embodiments of the present invention, there is provided a smart device, including: a processor; and a memory configured to store instructions executable by the processor; wherein, the processor is configured to perform:
determining data packets transmitted from and to a first MCU of a smart device;
adding respective serial numbers to each of the data packets; and
sending the data packets added with the respective serial numbers to a terminal such that the terminal processes and displays the data packets based on the respective serial numbers and performs debugging.

According to a seventh aspect of the embodiment, the invention relates to a computer program which, when being executed on a processor of a terminal, performs any one of the above methods according to the first aspect.

According to a eighth aspect of the, the invention relates to a computer program which, when being executed on a processor of a smart device, performs any one of the above methods according to the second aspect.

The technical solution provided by the embodiments of the present invention may achieve the following beneficial effects.

In an embodiment of the present invention, the terminal may acquire the data packets carried with the respective serial numbers, and process and display the data packets carried with the respective serial numbers, so as to perform debugging. In the embodiments of the present invention, the terminal is enabled to conveniently and directly determine data receiving and sending sequences based on the respective serial numbers, in this way, it is convenient to debug the second MCU, and find problems existing in data transmission timely, and also facilitate the user's operations.

In an embodiment of the present invention, the terminal may extract the respective serial numbers carried in the data packets, which facilitates the analysis of the data packets based on the respective serial numbers of the data packets. If sequence of the displayed data packet is inconsistent with sequence of the serial numbers, it indicates that there might be a problem existing in the data transmission, which provides convenience for the debugging.

In an embodiment of the present invention, the terminal may instruct the second MCU to modify programs based on analysis results of the data packets, so as to address the problems existing in the data transmission, in this way, normal transmission of data will be guaranteed.

In an embodiment of the present invention, the terminal may screen the acquired data packets and mask data packets irrelevant to the debugging and only retain data packets useful for the debugging, in such a manner that useless information will not be displayed and no interference with the debugging will be caused.

In an embodiment of the present invention, the terminal may acquire the data packets in a wireless communication manner, instead of acquiring the data packets through two serial lines as in the relevant art, so that costs of the serial lines can be saved. The terminal may also acquire the data packets based on a UDP or an IP, thereby, an acquisition rate of the data packets is increased, and packet loss rate is reduced.

In an embodiment of the present invention, the second MCU in the Wi-Fi module mounted in the smart device may determine the data packets transmitted between the second MCU and the first MCU of the smart device its own, and add respective serial numbers to the determined data packets, such that contents and the respective serial numbers of the data packets may be displayed on the terminal, this is convenient for the user to determine receiving and sending sequences of the data packets based on the respective serial numbers, and to perform the debugging, and it also facilitates operations of the user and optimizes user experience.

In an embodiment of the present invention, the second MCU in the smart device may pack the acquired data streams which are transmitted between the second MCU and the first MCU, to facilitate the addition of the respective serial numbers, as well as following analysis and debugging of the data packets by the terminal.

In an embodiment of the present invention, the second MCU in the smart device may send the data packets in a wireless communication manner, rather than sending the data packets through two serial lines as in the relevant art, so that costs of the serial lines can be saved. The second MCU may also send the data packets based on a UDP or an IP, thereby, a transmission rate of the data packets is increased, and packet loss rate is reduced.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flowchart illustrating a data processing method according to an exemplary embodiment of the present invention;
Fig. 2 is a flowchart illustrating another data processing method according to an exemplary embodiment of the present invention;
Fig. 3 is a flowchart illustrating a data processing method according to an exemplary embodiment of the present invention;
Fig. 4 is a flowchart illustrating another data processing method according to an exemplary embodiment of the present invention;
Fig. 5A is a schematic diagram illustrating an application scenario of a data processing method according to an exemplary embodiment of the present invention;
Fig. 5B is a schematic diagram illustrating results of a data processing method according to an exemplary embodiment of the present invention;
Fig. 6 is a block diagram illustrating a data processing device according to an exemplary embodiment of the present invention;
Fig. 7 is a block diagram illustrating another data processing device according to an exemplary embodiment of the present invention;
Fig. 8 is a block diagram illustrating another data processing device according to an exemplary embodiment of the present invention;
Fig. 9 is a block diagram illustrating another data processing device according to an exemplary embodiment of the present invention;
Fig. 10 is a block diagram illustrating another data processing device according to an exemplary embodiment of the present invention;
Fig. 11 is a block diagram illustrating another data processing device according to an exemplary embodiment of the present invention;
Fig. 12 is a block diagram illustrating another data processing device according to an exemplary embodiment of the present invention;
Fig. 13 is a block diagram illustrating another data processing device according to an exemplary embodiment of the present invention;
Fig. 14 is a block diagram illustrating another data processing device according to an exemplary embodiment of the present invention;
Fig. 15 is a block diagram illustrating a structure of a data processing device according to an exemplary embodiment of the present invention; and
Fig. 16 is a block diagram illustrating a structure of another data processing device according to an exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all the implementations consistent with the present invention. Instead, they are merely examples of devices and methods consistent with aspects related to the present invention as recited in the appended claims.

The terms used herein are merely for describing a particular embodiment, rather than limiting the present invention. As used in the present invention and the appended claims, terms in singular forms such as "a", "said" and "the" are intended to also include plural forms, unless explicitly dictated otherwise. It should also be understood that the term "and /or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present invention, a first element can also be referred to as a second element. Similarly, a second element can also be referred to as a first element. Depending on the context, a term "if" as used herein can be interpreted as "when", "where" or "in response to".

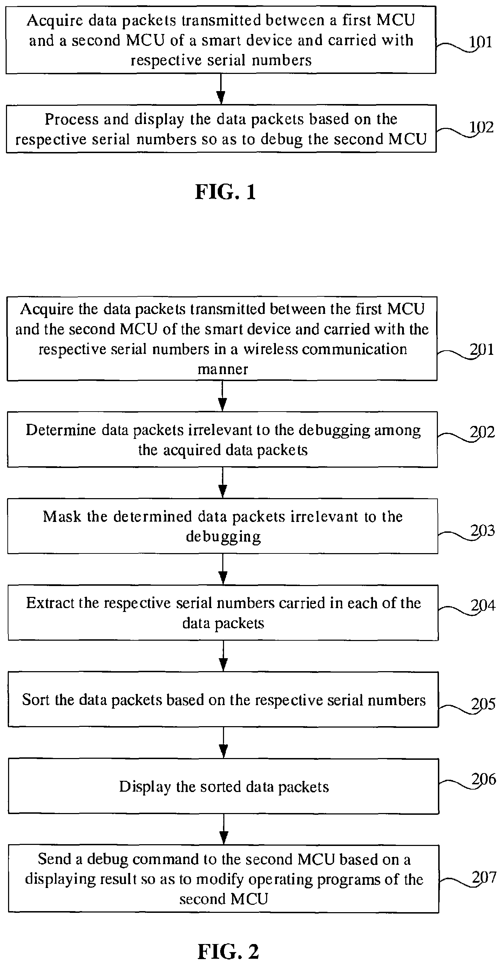

Fig. 1 is a flowchart illustrating a data processing method according to an exemplary embodiment of the present invention. As shown in Fig. 1, the method may be performed by a terminal, and may include the following steps.

In step 101, data packets transmitted between a first MCU and a second MCU of a smart device and carried with respective serial numbers are acquired. The second MCU is provided in a Wireless Fidelity (Wi-Fi) module of the smart device.

In the present invention, the smart device is provided with a Wi-Fi (Wireless Fidelity) module. The Wi-Fi module includes a Wi-Fi chip and the second MCU, and the second MCU communicates with the first MCU of the smart device via the Wi-Fi chip, and also communicates with other devices via the Wi-Fi chip.

As a smart routing device, the router used in the present invention may not only have a traditional routing function but also include an independent operating system and a magnetic disk. A size of a storage space of the magnetic disk may be flexibly set according to needs, for example, to 1 Tb.

The terminal in the present invention may be any Internet-enabled smart terminal, for example, a mobile phone, a tablet PC, a PDA (Personal Digital Assistant) and the like. The terminal may access the router through a wireless local area network, and access a server in a public network through the router.

The terminal may send a control command to the Wi-Fi module of the smart device through an App (Application), such as a smart home App, so as to control the smart device. The Wi-Fi chip in the Wi-Fi module of the smart device receives the control command, and the first MCU converts, in an defined protocol format, the received control command into a binary coded string identifiable by the first MCU of the smart device, and then sends the binary coded string to the first MCU of the smart device through a serial port. The first MCU executes the corresponding function to realize the control of the smart device by the terminal.

In step 102, the data packets are processed and displayed based on the respective serial numbers so as to debug the second MCU.

In an embodiment of the present invention, the terminal may acquire the data packets carried with the respective serial numbers, and process and display the data packets carried with the respective serial numbers, so as to perform debugging. In the embodiments of the present invention, the terminal is enabled to conveniently and directly determine data receiving and sending sequences based on the respective serial numbers, in this way, it is convenient to debug the second MCU, and discover problems existing in data transmission timely, and also facilitate the user's operations.

Fig. 2 is a flowchart illustrating another data processing method according to an exemplary embodiment of the present invention. As shown in Fig. 2, the method may be performed by a terminal, and on the basis of the embodiment described in reference to Fig. 1, the method may include the following steps.

In step 201, the data packets transmitted between the first MCU and the second MCU of the smart device and carried with the respective serial numbers are acquired in a wireless communication manner.

In this embodiment, the Wi-Fi module of the smart device may access the router via Wi-Fi. The router may be connected to the terminal such as a computer, a mobile phone via Wi-Fi, or the router may also be connected with the terminal through a serial line, so that the terminal may acquire the data packets transmitted between the first MCU and the second MCU and carried with the respective serial numbers in a wireless communication manner.

In another embodiment of this step, the data packets transmitted between the first MCU and the second MCU of the smart device and carried with the respective serial numbers may also be acquired based on a User Datagram Protocol (UDP) or an Internet Protocol (IP).

In this embodiment, the Wi-Fi module may be directly connected with the terminal via a serial line, and then may broadcast, in the form of UDP broadcasting, the data packets transmitted between the first MCU and the second MCU to all the devices within the local area network where the router resides, the terminal may acquire the data packets as long as it performs monitoring. Or, the Wi-Fi module may also send the data packets to a terminal having a specified IP so that the terminal acquires the data packets.

In step 202, data packets irrelevant to the debugging among the acquired data packets are determined.

In step 203, the determined data packets irrelevant to the debugging are masked.

In the embodiment of the present invention, the data packets are acquired for the purpose of debugging, thus those useless for or irreverent to the debugging among the data packets are masked, only retaining data packets useful for the debugging.

In step 204, the respective serial numbers carried in each of the data packets are extracted.

The data packets are packed and are added with the respective serial numbers by the second MCU in the smart device.

In step 205, the data packets are sorted based on the respective serial numbers.

In step 206, the sorted data packets are displayed.

In this step, information relevant to the data packets, such as log information, may be displayed, and the respective serial numbers of the data packets may also be displayed. The user may analyze whether data transmission between the first MCU and the second MCU is normal or not based on the log information. The user may also perform the analysis based on the respective serial numbers of the data packets, and if the sequence of the displayed data packets is inconsistent with the sequence of the serial numbers, it indicates that there might be a problem existing in the data transmission.

In the embodiment of the present invention, the method may also include the following steps.

In step 207, a debug command is sent to the second MCU based on a displaying result so as to modify operating programs of the second MCU.

In the embodiment of the present invention, the user may modify the operating programs of the second MCU based on the analysis results, or may send a debug command to the second MCU so as to modify the programs.

In the relevant art, the first MCU and the Wi-Fi module are connected to each other via two serial lines so as to perform communication. Two serial debugging tools will be required to check data transmitted in the two serial lines. Since data streams rather than data packets are transmitted in a serial port, general serial debugging tools has no time-dependent information, this is inconvenient to determine receiving and sending sequences of the data transmitted in the two serial lines, and thus causing great difficulty in debugging. For example, the serial debugging tool 1 acquires data A1, A2 and A3, and the serial debugging tool 2 acquires data B1, B2 and B3. In this case, sequences of A1 and B1, A2 and B2 as well as A3 and B3 are interminable. According to the nature of nework protocals, there even might be a case in which receiving and sending sequences of two data packets are opposite.

In the embodiment of the present invention, the first MCU and the second MCU may be connected to each other only via a serial line, and the data streams transmitted between the second MCU and the first MCU are packed by the second MCU, and added with the respective serial numbers according to the packing sequence. Thereby, the contents displayed in the terminal include some information on the data packets and also include the respective serial numbers, this is convenient for the user to analyze and debug the receiving and sending sequences of the data packets.

In the embodiment, acquiring and displaying of the data packets may be realized by python script, but the implementation manner is not limited thereto.

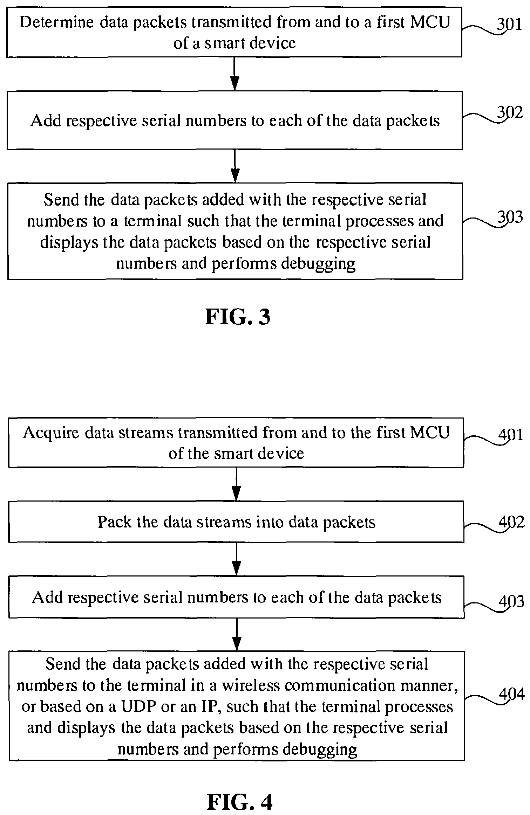

Fig. 3 is a flowchart illustrating a data processing method according to an exemplary embodiment. As shown in Fig. 3, the method may be performed by a smart device, and the method may include the following steps.

In step 301, data packets transmitted from and to a first MCU of a smart device are determined.

In this step, the data packets transmitted from and to the first MCU are determined by a second MCU in the Wi-Fi module provided in the smart device.

In step 302, respective serial numbers are added to each of the data packets.

In step 303, the data packets added with the respective serial numbers are sent to a terminal such that the terminal processes and displays the data packets based on the respective serial numbers and performs debugging.

In the above embodiment, the second MCU in the smart device may add respective serial numbers to the determined data packets, such that contents and the respective serial numbers of the data packets may be displayed on the terminal, this is convenient for the user to determine the receiving and sending sequences of the data packets based on the respective serial numbers, and to perform the debugging, and it also facilitates operations of the user and optimizes user experience.

Fig. 4 is a flowchart illustrating a data processing method according to an exemplary embodiment. As shown in Fig. 4, the method may be performed by a smart device, and on the basis of the embodiment shown in Fig. 3, the method may include the following steps.

In step 401, data streams transmitted from and to the first MCU of the smart device are acquired.

In step 402, the data streams are packed into data packets.

In this step, the second MCU packs the data streams into the data packets in order to facilitate the addition of the respective serial numbers.

In step 403, the respective serial numbers are added to each of the data packets.

In this step, the second MCU may add the respective serial numbers to each of the data packets based on the packing sequence.

In step 404, the data packets added with the respective serial numbers are sent to a terminal such that the terminal processes and displays the data packets based on the respective serial numbers and performs debugging.

In the above embodiment, the smart device may send the data packets to the terminal in a wireless communication manner, thereby costs of the serial lines can be saved. The smart device may also send the data packets to the terminal based on a UDP or an IP, no scanning by the terminal is needed, therefore, it is guaranteed that the terminal can monitor timely the data packets transmitted between the first MCU and the second MCU.

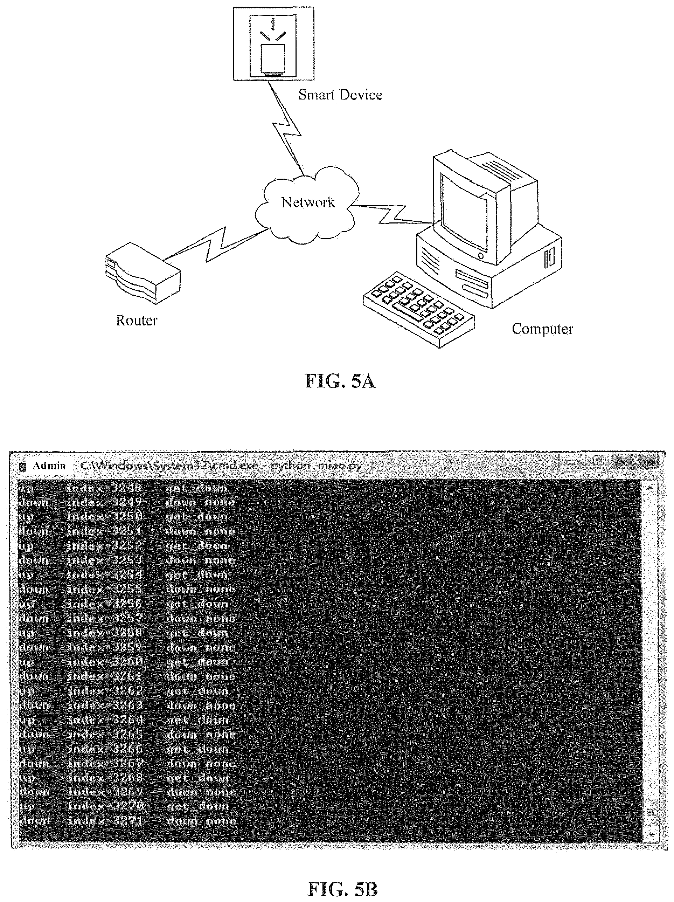

Fig. 5A is a schematic diagram illustrating an application scenario of a data processing method according to an exemplary embodiment of the present invention. As shown in Fig. 5A, the scenario includes a smart device which has a first MCU. The smart device is also installed with a Wi-Fi module. The Wi-Fi module includes a Wi-Fi chip and a second MCU. The scenario further includes a computer and a router, wherein the smart device wirelessly accesses the router through the Wi-Fi module, and the router wirelessly accesses to the computer.

The second MCU acquires the data streams transmitted between the second MCU and the first MCU, packs the acquired data streams, and adds respective serial numbers to the data packets, and then broadcasts, in the form of UPD broadcasting, the data packets added with the respective serial numbers to the local area network where the router resides. The computer in the local area network monitors the data packets broadcasted by the second MCU, and acquires the monitored data packets. The computer masks data packets irrevelant to the debugging among the acquired data packets, and then extracts the respective serial numbers of the remaining data packets. The computer sorts the data packets based on the respective serial numbers, and displays the sorted data packets and relevant data. As illustrated in Fig. 5B, the user can determine whether there is a problem existing in data transmission or not based on the sequence and contents of the displayed data packets, so as to debug the second MCU.

In the application senario illustrated in Fig. 5A, detailed procedures for implementing data processing may refer to the foregoing descriptions in Figs. 1-4, and the detailed description of which are not given herein any more.

Corresponding to the foregoing embodiments of the methods for processing data, the present invention further provides embodiments of devices for processing data which can respectively be comprised in a terminal and a smart device.

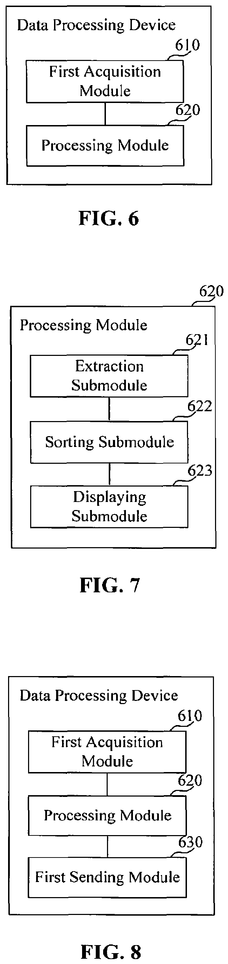

Fig. 6 is a block diagram illustrating a data processing device according to an exemplary embodiment of the present invention, which is used to perform the method described in reference to in Fig. 1. As shown in Fig. 6, the device may include a first acquisition module 610 and a processing module 620.

The first acquisition module 610 is configured to acquire data packets transmitted between a first MCU and a second MCU of a smart device and carried with respective serial numbers, the second MCU being provided in a Wi-Fi module of the smart device.

The processing module 620 is configured to process and display the data packets acquired by the first acquisition module 610 based on the respective serial numbers so as to debug the second MCU.

In the above embodiment, the terminal may acquire the data packets carried with the respective serial numbers, and process and display the data packets carried with the respective serial number, so as to perform debugging. In the embodiments of the present invention, the terminal is enabled to conveniently and directly determine data receiving and sending sequences based on the respective serial numbers, in this way, it is convenient to debug the second MCU, and discover problems existing in data transmission timely, and also facilitate the user's operations.

Fig. 7 is a block diagram illustrating another data processing device according to an exemplary embodiment of the present invention. As shown in Fig. 7, on the basis of the embodiment shown in Fig. 6, in this embodiment, the processing module 620 may include an extraction submodule 621, a sorting submodule 622 and a displaying submodule 623.

The extraction submodule 621 is configured to extract the respective serial numbers carried in each of the data packets, the respective serial numbers being added into each of the data packets by the second MCU.

The sorting submodule 622 is configured to sort the data packets based on the respective serial numbers extracted by the extraction submodule 621.

The displaying submodule 623 is configured to display the data packets sorted by the sorting submodule 622.

In the present embodiment, the terminal may extract the respective serial numbers carried in the data packets, which facilitates the analysis of the data packets based on the respective serial numbers of the data packets. If sequence of the displayed data packet is inconsistent with sequence of the serial numbers, it indicates that there might be a problem existing in the data transmission, which provides convenience for the debugging.

Fig. 8 is a block diagram illustrating another data processing device according to an exemplary embodiment of the present invention. As shown in Fig. 8, on the basis of the foregoing embodiment shown in Fig. 6 or 7, in this embodiment, the device may further include a first sending module 630.

The first sending module 630 is configured to send a debug command to the second MCU based on a displaying result so as to modify operating programs of the second MCU.

In the above embodiment, the terminal may instruct the second MCU to modify programs based on analysis results of the data packets, so as to address the problems existing in the data transmission, in this way, normal transmission of data will be guaranteed.

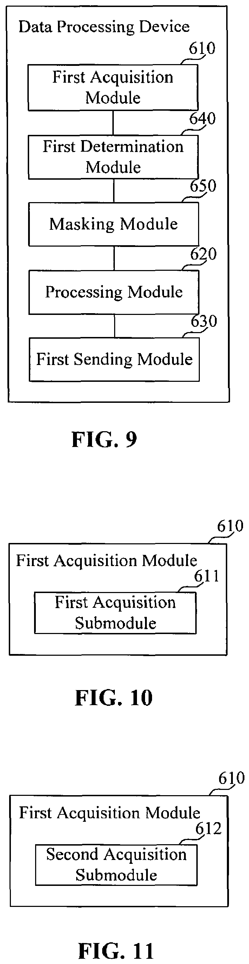

Fig. 9 is a block diagram illustrating another data processing device according to an exemplary embodiment of the present invention. As shown in Fig. 9, on the basis of the embodiment shown in Fig. 7, in this embodiment, the device may further include a first determination module 640 and a masking module 650.

The first determination module 640 is configured to determine data packets irrelevant to the debugging among the acquired data packets.

The masking module 650 is configured to mask the data packets determined by the first determination module 640.

In the above embodiment, the terminal may screen the acquired data packets and mask data packets irrelevant to the debugging and only retain data packets useful for the debugging, in such a manner that useless information will not be displayed and no interference with the debugging will be caused.

Fig. 10 is a block diagram illustrating another data processing device according to an exemplary embodiment of the present invention. As shown in Fig. 10, on the basis of the embodiment shown in Fig. 6, in this embodiment, the first acquisition module 610 may include a first acquisition submodule 611.

The first acquisition submodule 611 is configured to acquiring the data packets transmitted between the first MCU and the second MCU of the smart device and carried with the respective serial numbers in a wireless communication manner.

In the above embodiment, the terminal may acquire the data packets in a wireless communication manner, instead of acquiring the data packets through two serial lines as in the relevant art, so that costs of the serial lines can be saved.

Fig. 11 is a block diagram illustrating another data processing device according to an exemplary embodiment of the present invention. As shown in Fig. 11, on the basis of the foregoing embodiment shown in Fig. 6, in this embodiment, the first acquisition module 610 may include a second acquisition submodule 612.

The second acquisition submodule 612 is configured to acquire the data packets transmitted between the first MCU and the second MCU of the smart device and carried with the respective serial numbers based on a UDP or an IP.

In the above embodiment, the terminal may acquire the data packets based on a UDP or an IP, thereby, an acquisition rate of the data packets is increased, and packet loss rate is reduced.

The device for processing data in the foregoing embodiments shown in Figs. 6-11 may be performed by a terminal.

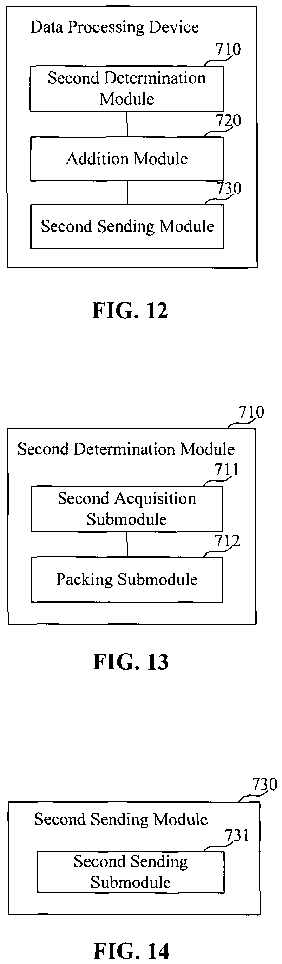

Fig. 12 is a block diagram illustrating a data processing device according to an exemplary embodiment of the present invention. As shown in Fig. 12, the device may be performed by a smart device, and may be used to perform the method illustrated in Fig. 3. The device may include a second determination module 710, an addition module 720 and a second sending module 730.

The second determination module 710 is configured to determine data packets transmitted from and to a first MCU of a smart device.

The addition module 720 is configured to add respective serial numbers to each of the data packets determined by the second determination module 710.

The second sending module 730 is configured to send the data packets added with the respective serial numbers by the addition module 720 to a terminal such that the terminal processes and displays the data packets based on the respective serial numbers and performs debugging.

In the above embodiment, the second MCU in the Wi-Fi module mounted in the smart device may determine the data packets transmitted from and to the first MCU of the smart device its own, and add respective serial numbers to the determined data packets, such that contents and the respective serial numbers of the data packets may be displayed on the terminal, this is convenient for the user to determine receiving and sending sequences of the data packets based on the respective serial numbers, and to perform the debugging, and it also facilitates operations of the user and optimizes user experience.

Fig. 13 is a block diagram illustrating another data processing device according to an exemplary embodiment of the present invention. As shown in Fig. 13, on the basis of the foregoing embodiment shown in Fig. 6, in this embodiment, the second determination module 710 may include a second acquisition submodule 711 and a packing submodule 712.

The second acquisition submodule 711 is configured to acquire data streams transmitted from and to the first MCU of the smart device.

The packing submodule 712 is configured to pack the data streams acquired by the second acquisition submodule 711 into data packets.

In the above embodiment, the second MCU in the smart device may pack the acquired data streams which are transmitted between the second MCU and the first MCU, to facilitate the addition of the respective serial numbers, as well as following analysis and debugging of the data packets by the terminal.

Fig. 14 is a block diagram illustrating another data processing device according to an exemplary embodiment of the present invention. As shown in Fig. 14, on the basis of the foregoing embodiment shown in Fig. 12, in this embodiment, the second sending module 730 may include a second sending submodule 731.

The second sending submodule 731 is configured to send the data packets added with the respective serial numbers by the addition module 720 to the terminal in a wireless communication manner, or based on a UDP or an IP.

In the above embodiment, the second MCU in the smart device may send the data packets in a wireless communication manner, rather than sending the data packets through two serial lines as in the relevant art, so that costs of the serial lines can be saved. The second MCU may also send the data packets based on a UDP or an IP, thereby, a transmission rate of the data packets is increased, and packet loss rate is reduced.

The data processing device in the above embodiemnts shown in Figs. 12-14 may be performed by a smart device installed with a Wi-Fi module.

Implementation of the functions and operations of the units in the above devices can be specifically referred to the implementation of the corresponding steps in the above methods, which will not be repeated herein.

For the device embodiments, since they correspond to the method embodiments, they can be referred to the related parts of the description of the method embodiments. The device embodiments described above are merely illustrative. The units described as separate parts may be or may not be physically separate, and the components illustrated as units may be or may not be physical units, and may be at the same location, or may be distributed to multiple units over the network. A part of or all of the modules can be selected to achieve the objective of the present invention as desired. One skilled in the art can understand and practice the embodiments without paying creative labor.

Corresponding to Fig. 6, the present invention further provides a terminal, including:
a processor; and
a memory configured to store instructions executable by the processor;
wherein, the processor is configured to perform:
   acquiring data packets transmitted between a first microcontroller unit (MCU) and a second MCU of a smart device and carried with respective serial numbers, the second MCU being provided in a Wireless Fidelity (Wi-Fi) module of the smart device; and
   processing and displaying the data packets based on the respective serial numbers so as to debug the second MCU.

Corresponding to Fig. 12, the present invention further provides a smart device, including:
a processor; and
a memory configured to store instructions executable by the processor;
wherein, the processor is configured to perform:
   determining data packets transmitted from and to a first MCU of a smart device;
   adding respective serial numbers to each of the data packets; and
   sending the data packets added with the respective serial numbers to a terminal such that the terminal processes and displays the data packets based on the respective serial numbers and performs debugging.

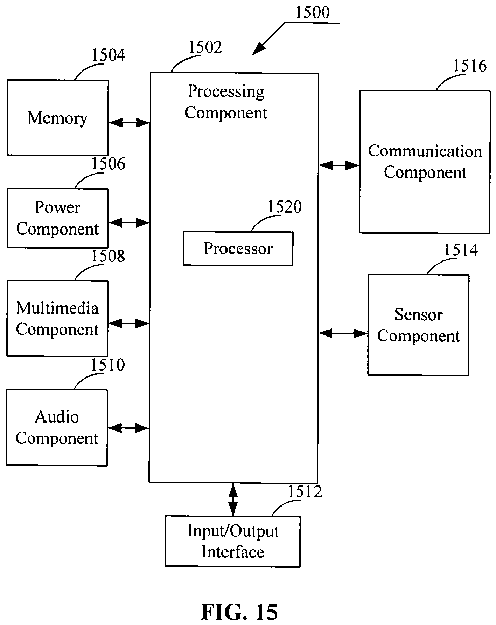

Fig. 15 is a block diagram illustrating a structure (terminal-side) of a data processing device 1500 according to an exemplary embodiment of the present invention. For example, the device 1500 may be a mobile phone, a computer, a digital broadcast terminal, a messaging device, a gaming console, a tablet, a medical device, exercise equipment, a personal digital assistant and the like which has a routing function.

Referring to Fig. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 usually controls overall operations of the device 1500, such as operations associated with display, telephone calls, data communications, camera operations and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any application or method operated on the device 1500, contact data, phonebook data, messages, pictures, videos, etc. The memory 1504 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1506 provides power to various components of the device 1500. The power component 1506 may include a power management system, one or more power sources, and other components associated with the generation, management, and distribution of power in the device 1500.

The multimedia component 1508 includes a screen for providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1508 includes a front camera and/or a rear camera. The front camera and/or the rear camera may receive external multimedia data while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone (MIC) configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, a button, and the like. The button may include, but not limited to: a home button, a volume button, a starting button and a locking button.

The sensor component 1514 includes one or more sensors to provide status assessments of various aspects of the device 1500. For instance, the sensor component 1514 may detect an open/closed status of the device 1500, relative position of components, e.g., the display and the keyboard, of the device 1500, a change in position of the device 1500 or a component of the device 1500, a presence or absence of an user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may further include a light sensor, such as a CMOS or CCD image sensor, for use in imaging applications. In some embodiments, the sensor component 1514 may further include an accelerometer sensor, a gyroscope sensor, a magnetic sensor, a pressure sensor, a microwave sensor, or a temperature sensor.

The communication component 1516 is configured to facilitate communication, in a wire or wireless manner, between the device 1500 and other devices. The device 1500 can access a wireless network based on a communication standard, such as WiFi, 2G or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 1500 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there further provides a non-transitory computer readable storage medium including instructions, such as included in the memory 1504, executable by the processor 1520 in the device 1500, for performing the above described methods. For example, the non-transitory computer-readable storage medium may be a ROM, a random access memory (RAM), a CD-ROM, a magnetic tape, a floppy disc, an optical data storage device and the like.

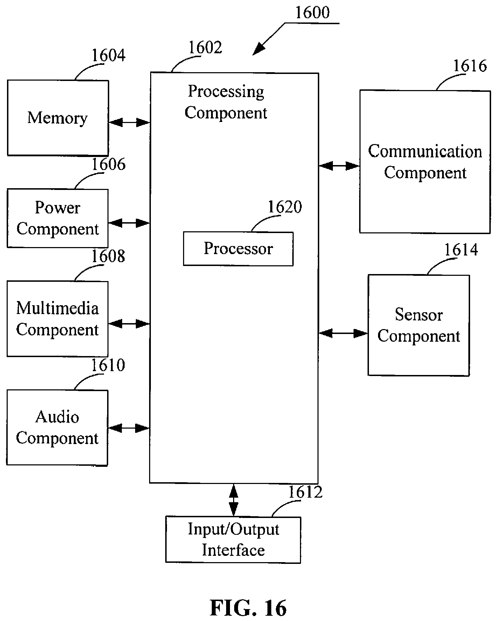

Fig. 16 is a block diagram illustrating a structure (smart device-side) of a data processing device 1600 according to an exemplary embodiment of the present invention. For example, the device 1600 may be a mobile phone, a computer, a digital broadcast terminal, a messaging device, a gaming console, a tablet, a medical device, exercise equipment, a personal digital assistant and the like which has a routing function.

Referring to Fig. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 usually controls overall operations of the device 1600, such as operations associated with display, telephone calls, data communications, camera operations and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the device 1600. Examples of such data include instructions for any application or method operated on the device 1600, contact data, phonebook data, messages, pictures, videos, etc. The memory 1604 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1606 provides power to various components of the device 1600. The power component 1606 may include a power management system, one or more power sources, and other components associated with the generation, management, and distribution of power in the device 1600.

The multimedia component 1608 includes a screen for providing an output interface between the device 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1608 includes a front camera and/or a rear camera. The front camera and/or the rear camera may receive external multimedia data while the device 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone (MIC) configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, a button, and the like. The button may include, but not limited to: a home button, a volume button, a starting button and a locking button.

The sensor component 1614 includes one or more sensors to provide status assessments of various aspects of the device 1600. For instance, the sensor component 1614 may detect an open/closed status of the device 1600, relative position of components, e.g., the display and the keyboard, of the device 1600, a change in position of the device 1600 or a component of the device 1600, a presence or absence of an user contact with the device 1600, an orientation or an acceleration/deceleration of the device 1600, and a change in temperature of the device 1600. The sensor component 1614 may include a proximity sensor configured to detect the presence of nearby objects without any physical contact. The sensor component 1614 may further include a light sensor, such as a CMOS or CCD image sensor, for use in imaging applications. In some embodiments, the sensor component 1614 may further include an accelerometer sensor, a gyroscope sensor, a magnetic sensor, a pressure sensor, a microwave sensor, or a temperature sensor.

The communication component 1616 is configured to facilitate communication, in a wire or wireless manner, between the device 1600 and other devices. The device 1600 can access a wireless network based on a communication standard, such as WiFi, 2G or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 1600 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there further provides a non-transitory computer readable storage medium including instructions, such as included in the memory 1504, executable by the processor 1520 in the device 1500, for performing the above described methods. For example, the non-transitory computer-readable storage medium may be a ROM, a random access memory (RAM), a CD-ROM, a magnetic tape, a floppy disc, an optical data storage device and the like.

The present invention further discloses a non-transitory computer-readable storage medium having stored therein instructions that, when executed by a processor of a mobile terminal, causes the mobile terminal to perform a method for processing data, including:
acquiring data packets transmitted between a first microcontroller unit (MCU) and a second MCU of a smart device and carried with respective serial numbers, the second MCU being provided in a Wireless Fidelity (Wi-Fi) module of the smart device; and
processing and displaying the data packets based on the respective serial numbers so as to debug the second MCU.

The embodiments of the present invention further disclose a non-transitory computer-readable storage medium having stored therein instructions that, when executed by a processor of a smart device, causes a router to perform a method for processing data, including:
determining data packets transmitted from and to a first MCU of a smart device;
adding respective serial numbers to each of the data packets; and
sending the data packets added with the respective serial numbers to a terminal such that the terminal processes and displays the data packets based on the respective serial numbers and performs debugging.

## Claims

1. A method for processing data, comprising:
acquiring (S101) data packets transmitted between a first microcontroller unit (MCU) and a second MCU of a smart device and carried with respective serial numbers, the second MCU being provided in a Wireless Fidelity (Wi-Fi) module of the smart device; and
processing and displaying (S102) the data packets based on the respective serial numbers so as to debug the second MCU.

2. The method of claim 1, wherein processing and displaying the data packets based on the respective serial numbers comprises:
extracting (S204) the respective serial numbers carried in each of the data packets, the respective serial numbers being added into the data packets by the second MCU;
sorting (S205) the data packets based on the respective serial numbers; and
displaying (S206) the sorted data packets.

3. The method of claim 1 or 2, wherein after processing and displaying the data packets based on the respective serial numbers, the method further comprises:
sending (S207) a debug command to the second MCU based on a displaying result so as to modify operating programs of the second MCU.

4. The method of claim 2, wherein before extracting the respective serial numbers carried in each of the data packets, the method further comprises:
determining (S202) data packets irrelevant to the debugging among the acquired data packets; and
masking (S203) the determined data packets.

5. The method of claim 1, wherein acquiring data packets transmitted between a first MCU and a second MCU of a smart device and carried with respective serial numbers comprises:
acquiring (S201) the data packets transmitted between the first MCU and the second MCU of the smart device and carried with the respective serial numbers in a wireless communication manner.

6. The method of claim 1, wherein acquiring data packets transmitted between a first MCU and a second MCU of a smart device and carried with respective serial numbers comprises:
acquiring the data packets transmitted between the first MCU and the second MCU of the smart device and carried with the respective serial numbers based on a User Datagram Protocol (UDP) or an Internet Protocol (IP).

7. A method for processing data, comprising:
determining (S301) data packets transmitted from and to a first MCU of a smart device;
adding (S302, S403) respective serial numbers to each of the data packets;
sending (S303) the data packets added with the respective serial numbers to a terminal such that the terminal processes and displays the data packets based on the respective serial numbers and performs debugging.

8. The method of claim 7, wherein before determining data packets transmitted from and to a first MCU of a smart device, the method further comprises:
acquiring (S401) data streams transmitted from and to the first MCU of the smart device; and
packing (S402) the data streams into data packets.

9. The method of claim 7, wherein sending the data packets added with the respective serial numbers to a terminal comprises:
sending (S404) the data packets added with the respective serial numbers to the terminal in a wireless communication manner, or based on a User Datagram Protocol (UDP) or an Internet Protocol (IP).

10. A device for processing data, comprising:
a first acquisition module (610) configured to acquire data packets transmitted between a first MCU and a second MCU of a smart device and carried with respective serial numbers, the second MCU being provided in a Wi-Fi module of the smart device; and
a processing module (620) configured to process and display the data packets based on the respective serial numbers so as to debug the second MCU.

11. The device of claim 10, wherein the processing module comprises:
an extraction submodule (621) configured to extract the respective serial numbers carried in each of the data packets, the respective serial numbers being added into the data packets by the second MCU;
a sorting submodule (622) configured to sort the data packets based on the respective serial number; and
a displaying submodule (623) configured to display the sorted data packets.

12. The device of claim 10 or 11, wherein the device further comprises:
a first sending module (630) configured to send a debug command to the second MCU based on a displaying result so as to modify operating programs of the second MCU.

13. The device of claim 11, wherein the device further comprises:
a first determination module (640) configured to determine data packets irrelevant to the debugging among the acquired data packets; and
a masking module (650) configured to mask the determined data packets.

14. The device of claim 10, wherein the first acquisition module comprises:
a first acquisition submodule (611) configured to acquire the data packets transmitted between the first MCU and the second MCU of the smart device and carried with the respective serial numbers in a wireless communication manner.

15. The device of claim 10, wherein the first acquisition module comprises:
a second acquisition submodule (612) configured to acquire the data packets transmitted between the first MCU and the second MCU of the smart device and carried with the respective serial numbers based on a User Datagram Protocol (UDP) or an Internet Protocol (IP).

16. A device for processing data, comprising:
a second determination module (710) configured to determine data packets transmitted from and to a first MCU of a smart device;
an addition module (720) configured to add respective serial numbers to each of the data packets;
a second sending module (730) configured to send the data packets added with the respective serial numbers to a terminal such that the terminal processes and displays the data packets based on the respective serial numbers and performs debugging.

17. The device of claim 16, wherein the second determination module comprises:
a second acquisition submodule (711) configured to acquire data streams transmitted from and to the first MCU of the smart device; and
a packing submodule (712) configured to pack the data streams into data packets.

18. The device of claim 16, wherein the second sending module comprises:
a second sending submodule (731) configured to send the data packets added with the respective serial numbers to the terminal in a wireless communication manner, or based on a User Datagram Protocol (UDP) or an Internet Protocol (IP).

19. A terminal, comprising:
a processor; and
a memory configured to store instructions executable by the processor;
wherein, the processor is configured to perform:
acquiring data packets transmitted between a first microcontroller unit (MCU) and a second MCU of a smart device and carried with respective serial numbers, the second MCU being provided in a Wireless Fidelity (Wi-Fi) module of the smart device; and
processing and displaying the data packets based on the respective serial numbers so as to debug the second MCU.

20. A smart device, comprising:
a processor; and
a memory configured to store instructions executable by the processor;
wherein, the processor is configured to perform:
determining data packets transmitted from and to a first MCU of a smart device;
adding respective serial numbers to each of the data packets; and
sending the data packets added with the respective serial numbers to a terminal such that the terminal processes and displays the data packets based on the respective serial numbers and performs debugging.
